# EUROPEAN PATENT APPLICATION

(11) **EP 1 111 946 A1**
(43) Date of publication of application: **27.06.2001**
(21) Application number: 99125552.2
(22) Date of filing: 21.12.1999
(51) Int. Cl.: H04Q 7/22, G06F 3/147

(54) **Portable communication device with an editing mode for editing messages of a predetermined maximum length**

(71) Applicant: Sony International (Europe) GmbH, 50829 Köln (DE)
(72) Inventor: Ripart, Lionel, Heisenbergbogen 1 85609 Aschheim (DE); Becker, Johannes, Heisenbergbogen 1, 85609 Aschheim (DE)
(74) Representative: Körber, Martin, Dipl.-Phys.

(57) **Abstract**

The present invention relates to a portable communication device (1) for a wireless communication system, with a display means (2, 14) for displaying information, whereby the communication device (1) has an editing mode in which pieces of information having a predetermined maximum encoding length can be created, said predetermined maximum encoding length corresponding to a maximum number of single characters. The display means (2, 14) displays a list of characters which can be selected for a piece of information so that a special character having an encoding length of two or more single characters is not displayed in said list in case that by additionally selecting said special character the overall encoding length of a piece of information being created would exceed said predetermined maximum encoding length. Alternatively, the display means (2, 14) displays a list of words and/or phrases which can be selected for a piece of information so that certain words and/or phrases are displayed in said list as not selectable in case that by additionally selecting said certain word and/or phrase the overall encoding length of a piece of information being created would exceed said predetermined maximum encoding length.

## Description

The present invention relates to a portable communication device for a wireless communication system, with a display means for displaying information, whereby said communication device has an editing mode in which pieces of information having a predetermined maximum encoding length can be created.

Portable communication devices for wireless communication systems are known in many different variations. For example, portable telephones for wireless telecommunication systems, as e.g. the GSM or the UMTS system are known and further, portable laptops or portable computers comprising a function for transmitting and receiving information in a wireless communication system are known. All these portable communication devices for wireless communication systems comprise a display means for displaying information for a user. Thereby, the information can be received information received from other communication devices or base stations of the wireless communication system or information to be transmitted over the air interface of the wireless communication system. Information to be transmitted can either be stored in the communication device, as e.g. predefined messages or the like, which are transmitted upon activation of a corresponding key of the communication device by a user. Additionally, the communication device has an editing mode, as e.g. an editing mode to create SMS messages or telephone book entries. In this case, a user creates and writes a message or a telephone book entry using the keys of a key pad of the communication device, whereby the correspondingly created message or telephone book entry is stored in a respective memory. A SMS message and a telephone book entry being created are e.g stored in a RAM memory of the communication device and/or on a SIM card in case that the communication device is a portable telephone. DE 197 06 596 A1 discloses an example of predefined messages in a portable telephone, whereby blanks are left in the predefined messages which can be filled in by a user. The predefined messages are stored in RAM part of a memory means of the portable telephone.

Usually, the space available for a piece of information to be created or edited, like a SMS message or a telephone book entry, is limited due to transmission system restrictions (in case of SMS messages), memory restrictions (in case of telephone book entries) or the like. For example, the maximum length of a SMS message in a GSM wireless telecommunication system is restricted to an encoding length of 160 single characters and the length of a telephone book entry (name or number) is restricted, e.g. to an encoding length of 10 to 20 single characters. Single characters in the context of the present application are characters to be encoded with the smallest encoding length of the encoding system in the communication device. In the GSM telecommunication system, these single characters are classified in the "7 bit GSM default alphabet table". Each of these single characters is encoded in 7 bits. Therefore, in a SMS message of the GSM system, a maximum of 140 octets (one octet is 8 bits) may be comprised so that it is possible to pack 160 single characters into the available space if each single character is coded into a binary pattern of 7 bit length. The encoding length of a single character in the GSM system is therefore 7 bit. The word character in the context of the present application comprises alphabetic characters, numeric characters and all other kinds of possible symbols which may be displayed on the display means or transmitted over the wireless communication link. Besides the single characters which only need the smallest encoding length in the encoding system, the alphabet of possible characters has been extended to special characters having an encoding length of two or more single characters in the encoding system. In the GSM system, these special characters are classified in the "GSM 7 bit default alphabet extension table". In particular, reference made is to the technical specification of GSM 3.38 V7.1.0 (1999-03) "digital cellular telecommunication system (phase 2+), alphabets and language-specific information (GSM 03.38 version 7.1.0 release 1998), reference DEN/SMG-040338Q7, copyright European telecommunications standard institute 1999. For example, a special character like the Euro-symbol has an encoding length of two single characters, namely 14 bits.

Known portable communication devices for wireless communication systems now have the disadvantage, that when a piece of information (message, telephone book entry or the like) being currently created approaches the end of its maximum encoding length, where the selection of the special character having a length of two or more single characters would cause the overall encoding length of the piece of information being created to exceed the predetermined maximum encoding length, a user trying to select such a special character for this piece of information does not know that he reached the maximum encoding length and is wondering why the special character he would like to select is not added to the piece of information he is currently creating. The user will therefore try to add this special character several times which leads to a time-consuming and inefficient handling of such known portable communication devices while editing pieces of information.

The object of the present invention is therefore to provide a portable communication device for a wireless communication system, with a display means for displaying information, whereby said communication device has an editing mode in which pieces of information having a predetermined maximum encoding length can be created, said predetermined maximum encoding length corresponding to a maximum number of single characters, in which editing and creating of pieces of information having the predetermined maximum encoding length even comprising special characters having an encoding length of two or more single characters is possible in a simple and efficient way.

The above object is achieved by a portable communication device for a wireless communication system according to claim 1, with a display means for displaying information, whereby said communication device has an editing mode in which pieces of information having a predetermined maximum encoding length can be created, said predetermined maximum encoding length corresponding to a maximum number of single characters, and whereby said display means displays a list of characters which can be selected for a piece of information so that a special character having an encoding length of two or more single characters is not displayed in said list in case that by additionally selecting said special character the overall encoding length of a piece of information being created would exceed said predetermined maximum encoding length.

The above object is further achieved by a portable communication device for a wireless communication system, with a display means for displaying information, whereby said communication device has an editing mode in which pieces of information having a predetermined maximum encoding length can be created, said predetermined maximum encoding length corresponding to a maximum number of single characters, and whereby said display means displays a list of words and/or phrases which can be selected for a piece of information so that certain words and/or phrases are displayed in said list as not selectable in case that by additionally selecting said certain word and/or phrase the overall encoding length of a piece of information being created would exceed said predetermined maximum encoding length.

Thus, the portable communication device according to the present invention enables a user to create pieces of information in an editing mode, like messages or telephone book entries, having a predetermined maximum encoding length in a simple and easy way. Particularly, if the special characters are not displayed in case that there is not enough room left a user is not able to try to select characters which have an encoding length which is too long. On the other hand, if words and/or phrases are clearly indicated as not selectable a user will - even when he or she tries to select that word and/or phrase - immediately know why it is not possible to select that word and/or phrase and select another word and/or phrase or an abbreviation. Thus, the use of the portable communication device in an editing mode is essentially improved. Particularly, the editor is very closely linked to the displayed characters to be selected.

Advantageously, in the portable communication device as defined in claim 1, a single character is encoded in 7 bits, and a special character is encoded in N × 7 bits, whereby N ≥ 2. Further advantageously, said editing mode is a SMS editing mode, in which the maximum encoding length of a piece of information to be created corresponds to 160 single characters. Alternatively, said editing mode is a telephone book editing mode in which the maximum encoding length of a piece of information to be created corresponds to 10 to 20 single characters. As an example, a special character having an encoding length of two single characters is the Euro-symbol.

Advantageously, in the portable communication device as defined in claim 6, certain words and/or phrases are highlighted in said list and other words and/or phrases in said list which can still be selected for a piece of information being created are not highlighted. Alternatively, certain words and/or phrases are not highlighted in said list and other words and/or phrases in said list which can still be selected for a piece of information being created are highlighted. Further advantageously, parts of said certain words and/or phrases, the selection of which would cause a piece of information being created to have exactly the predetermined maximum encoding length, are displayed as being selectable. Thereby, said parts of said certain words and/or phrases are separated by a vertical line from the rest of the respective word and/or phrase. Further advantageously, abbreviations for said certain words and/or phrases are displayed in said list, whereby the list of said abbreviations is selected so that a predetermined maximum encoding length of a piece of information being created would not be exceeded by selecting a respective abbreviation. For example, said editing mode is a SMS editing mode, in which the maximum encoding length of a piece of information to be created corresponds to 160 single characters.

In the following description, a preferred embodiment of the present invention is explained in more detail relating to the enclosed drawings, in which
figure 1 shows a schematic top view of a portable communication device for a wireless communication system according to the present invention,
figure 2 shows a block diagram of a portable communication device according to the present invention, and
figure 3 shows a schematic view of a display of a portable communication device according to the present invention in different states of an editing mode.

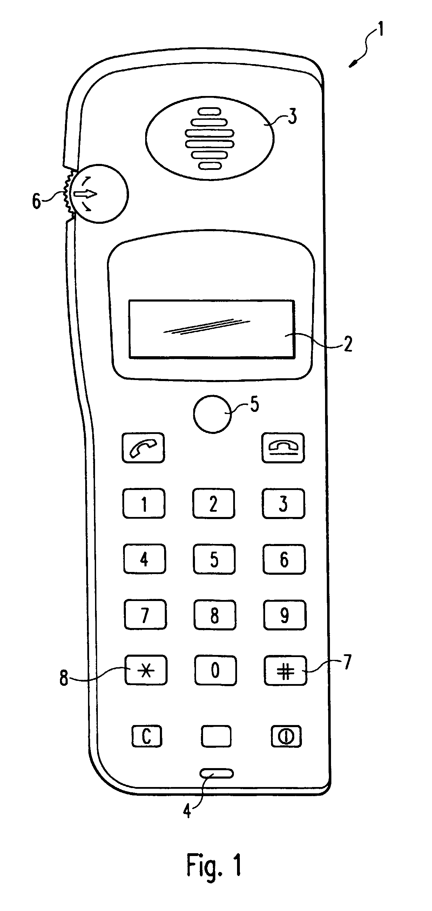

Figure 1 shows a schematic top view of a portable telephone 1 for a wireless telecommunication system, as e.g. the GSM or UMTS system. Although the following description solely relates to a portable telephone, the portable communication device for a wireless communication system according to the present invention may be any other portable device able to communicate in a wireless communication system, as e.g. a portable laptop computer, a portable TV receiver or the like comprising functions for communicating data in a wireless communication system.

The portable telephone 1 shown in figure 1 comprises a display means 2, on which information like characters, menu items, text information, names, numbers or the like can be displayed to be read by a user. The portable telephone 1 further comprises a loudspeaker 3 on the upper front part and a microphone 4 on the lower front part of the casing. Further, an enter or menu key 5 as enter means for entering/selecting a respective menu item or function is provided. The portable telephone 1 further comprises the usual 10 alphanumeric keys (numbers 0 to 9), a pound key 7, a star key 8, a clear key, a communication start key, a communication end key, a power on/off key and so on. Further, the portable telephone 1 comprises a jog dial 6, which is a rotatable key, a part of which is exposed to the outside. The exposed part can be touched by the finger of a user's hand and may be rotated clockwise (upwardly) or counterclockwise (downwardly) to scroll through information displayed on the display means 2. Preferably, the display means 2 of the portable telephone 1 comprises a graphical display, which has a higher resolution than usual text or character displays.

A piece of information displayed on the display means 2, as e.g. a menu function, a name, a telephone number, a character, a number or the like can be selected by pressing or clicking the jog dial 6 inwardly or by pressing the enter key 5 depending on the configuration of the portable telephone 1.

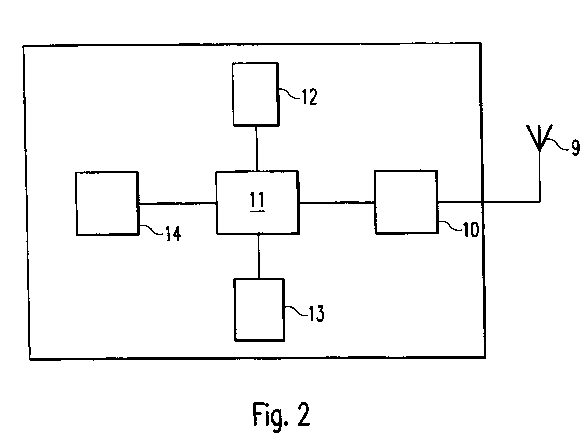

In figure 2, a block diagram of a portable telephone 1 as shown in figure 1 is shown. The portable telephone 1 comprises an antenna 9 and a transmitting/receiving means 10 for communicating with other communication devices or base stations of the wireless communication system. The transmitting/receiving means 10 is connected to a central processing unit 11, which controls the operation of the portable telephone 1. The central processing unit 11 is connected to a display means 12, which may correspond to the display means 2 of the portable telephone 1 shown in figure 1, to a memory means 13 and a keypad 14. The keypad 14 comprises e.g. all keys of the portable telephone 1 shown in figure 1 as well as the jog dial 6. The central processing unit 11 controls and drives the keypad 14, the memory means 13 and the display means 12, so that e.g. in an editing mode, in which pieces of information are created, a text typed in by a user is displayed on the display means 12 and stored in the memory means 13. In case that the created piece of information is a SMS message, it is transmitted by the transmitting/receiving means 10 and the antenna 9 to a receiving device. In an editing mode of the portable telephone 1, in which pieces of information can be created, as e.g. a SMS message editing mode or a telephone book editing mode, a list of alphabetic characters, numeric characters or other symbols stored in the memory means 13 is displayed as a line of characters on the bottom of the display or as a two-dimensional array of characters on the entire display.

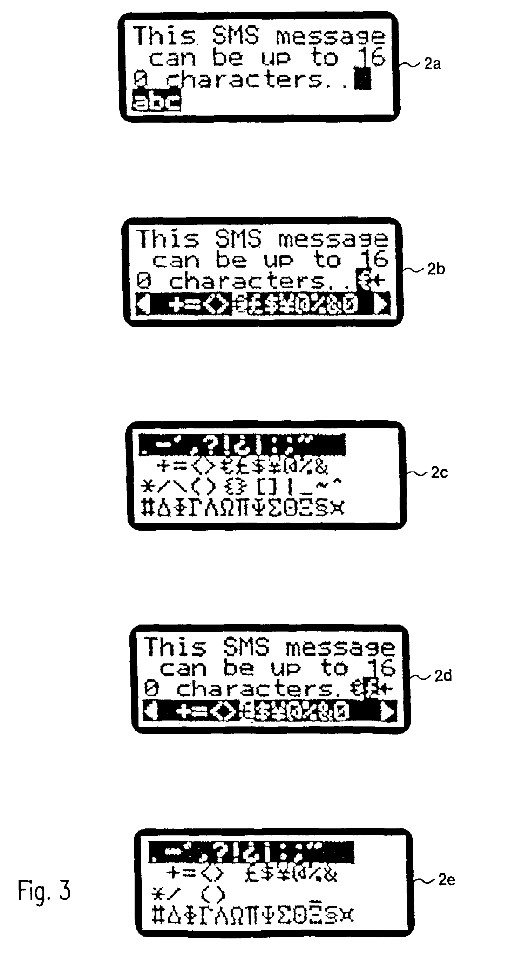

Figure 3 shows the display means 2 of the portable telephone 1 of figure 1 in different states of a SMS message editing mode. Display 2a thereby shows a pure text message being created. This text message contains only alphabetic characters having the encoding length of a single character or a single space as defined in the "7 bit GSM default alphabet table". The predetermined maximum encoding length of a SMS message is 160 single characters. The message shown in display 2a already has a length of 158 single characters, so that only two more single characters may be selected and added to the message to reach the predetermined maximum encoding length. Display 2b shows the same message as display 2a, whereby the Euro-symbol has been selected and added from a list of characters shown on the bottom of the display 2b. The list of characters shown on the bottom of the display 2b is e.g. displayed upon pressing the pound key 7. Then, by turning the jog dial 6, the characters are highlighted one after the other so that a user can select the character he would like to add to the message he is currently creating. Since the Euro-symbol has an encoding length of two single characters (14 bits), the message shown on display 2b has reached the predetermined maximum encoding length of 160 single characters. Depending on the configuration of the telephone apparatus 1, a two-dimensional array of characters may also be displayed upon activating a corresponding key of the keypad, as e.g. the pound key 7. An example for such a two-dimensional array is shown on display 2c. For example, when a user is creating a SMS message as shown on display 2a, he may activate the two-dimensional array of characters displayed on display 2c in order to select a character to be added to the message therefrom. The two-dimensional array of characters displayed on display 2c comprises single characters and special characters having an encoding length of two single characters, such as the symbols ^{}\[]^{~}| 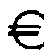 . Since, however, the message being currently created has an encoding length of 158 single characters, anyone of the displayed characters from display 2c may be selected to be added to the message without the risk, that the predetermined maximum encoding length of the message may be exceeded. Thus, all possible characters may be displayed in the character line on the bottom of the display 2b as well as the two-dimensional array of characters on display 2c.

The situation is different for a message reaching the end of the maximum encoding length of the message, as e.g. shown in display 2d. The message shown on display 2d has an encoding length of 159 single characters, so that only a further single character may be added to this message. Therefore, in the line of characters shown on the bottom of display 2d and the two-dimensional array of characters on display 2e only single characters are displayed. All special characters having an encoding length of two single characters are not displayed anymore, since the selection and addition of one of these special characters would cause the overall encoding length of the message being created to exceed the predetermined maximum encoding length. For example, adding a special character having an encoding length of two single characters to the message shown on display 2d would result in an overall encoding length of 161 single characters so that the predetermined maximum encoding length of 160 characters is exceeded. Thus, the special characters are not shown in the selection of characters to be selected so that a user cannot try to add such a special character to the message. Accordingly, the Euro-symbol in the line of characters displayed on the bottom of display 2d is not longer displayed and the symbols ^{}\[]^{~}| 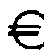 are not longer displayed in the two-dimensional array of characters of display 2e. Thus, messages having the maximum possible encoding length or almost the maximum possible encoding length can be created in an effective way without irritating the user by presenting characters which he is not allowed to select.

In another embodiment of the present invention, the display 2 displays a list of words and/or phrases which can be selected for a piece of information so that certain words and/or phrases are displayed in said list as not selectable in case that by additionally selecting the certain word and/or phrase the overall encoding length of a piece of information being created would exceed the predetermined maximum encoding length.

## Claims

1. Portable communication device (1) for a wireless communication system, with a display means (2, 14) for displaying information,
whereby said communication device has an editing mode in which pieces of information having a predetermined maximum encoding length can be created, said predetermined maximum encoding length corresponding to a maximum number of single characters, and
whereby said display means (2, 14) displays a list of characters which can be selected for a piece of information so that a special character having an encoding length of two or more single characters is not displayed in said list in case that by additionally selecting said special character the overall encoding length of a piece of information being created would exceed said predetermined maximum encoding length.

2. Portable communication device according to claim 1,
**characterized in,**
that a single character is encoded in 7 bits and a special character is encoded in N × 7 bits, whereby N ≥ 2.

3. Portable communication device according to claim 1 or 2,
**characterized in,**
that said editing mode is a SMS editing mode, in which the maximum encoding length of a piece of information to be created corresponds to 160 single characters.

4. Portable communication device according to claim 1 or 2,
**characterized in,**
that said editing mode is a telephone book editing mode, in which the maximum encoding length of a piece of information to be created corresponds to 10 to 20 single characters.

5. Portable communication device according to one of the claims 1 to 4,
**characterized by**
that a special character having an encoding length of two single characters is the Euro-Symbol.

6. Portable communication device (1) for a wireless communication system, with
a display means (2, 14) for displaying information,
whereby said communication device has an editing mode in which pieces of information having a predetermined maximum encoding length can be created, said predetermined maximum encoding length corresponding to a maximum number of single characters, and
whereby said display means (2, 14) displays a list of words and/or phrases which can be selected for a piece of information so that certain words and/or phrases are displayed in said list as not selectable in case that by additionally selecting said certain word and/or phrase the overall encoding length of a piece of information being created would exceed said predetermined maximum encoding length.

7. Portable communication device according to claim 6,
**characterized in,**
that said certain words and/or phrases are highlighted in said list and other words and/or phrases in said list which can still be selected for a piece of information being created are not highlighted.

8. Portable communication device according to claim 6,
**characterized in,**
that said certain words and/or phrases are not highlighted in said list and other words and/or phrases in said list which can still be selected for a piece of information being created are highlighted.

9. Portable communication device according to one of the claims 6 to 8,
**characterized in,**
that parts of said certain words and/or phrases, the selection of which would cause a piece of information being created to have exactly the predetermined maximum encoding length, are displayed as being selectable.

10. Portable communication device according to claim 9,
**characterized in,**
that said parts of said certain words and/or phrases are separated by a vertical line from the rest of the respective word and/or phrase.

11. Portable communication device according to one of the claims 6 to 10,
**characterized in,**
that abbreviations for said certain words and/or phrases are displayed in said list, whereby the length of said abbreviations is selected so that the predetermined maximum encoding length of a piece of information being created would not be exceeded by selecting a respective abbreviation.

12. Portable communication device according to one of the claims 6 to 10,
**characterized in,**
that said editing mode is a SMS editing mode, in which the maximum encoding length of a piece of information to be created corresponds to 160 single characters.
